# FASCICULE DE BREVET EUROPEEN

(11) **EP 1 931 005 B1**
(45) Date de publication et mention de la délivrance du brevet: **05.12.2018**
(21) Numéro de dépôt: 07354054.4
(22) Date de dépôt: 05.10.2007
(51) Int. Cl.: H02G 5/02

(54) **Isolateur électrique pour jeu de barres équipé d'un dispositif d'amortissement des vibrations**
Elektrischer Isolator für einen Satz von Leisten, der mit einer Schwingungsdämpfungsvorrichtung ausgestattet ist.
Electrical insulator for a set of rods equipped with a vibration damping device

(30) Priorité: 08.12.2006 FR 0610702
(43) Date de publication de la demande: 11.06.2008
(73) Titulaire: Schneider Electric Industries SAS, 92500 Rueil-Malmaison (FR)
(72) Inventeur: Bouchard, Jean-Luc, 38050 Grenoble Cedex 09 (FR); Blochouse, Philippe, 38050 Grenoble Cedex 09 (FR); Bouffet, Olivier, 38050 Grenoble Cedex 09 (FR)
(74) Mandataire: Tripodi, Paul

(56) Documents cités:
- DE-A1- 2 717 134
- FR-A- 1 238 459
- US-A- 3 011 011
- US-A- 4 255 838

## Description

La présente invention concerne un isolateur électrique pour jeu de barres équipé d'un dispositif d'amortissement des vibrations résultant du passage du courant dans les barres, ledit isolateur étant destiné à maintenir l'écartement des barres les unes par rapport aux autres.
On connaît des isolateurs comportant au niveau des surfaces de contact avec les barres, des patins amortisseurs en forme de U, lesquels patins épousent les surfaces de l'isolateur en contact avec les barres.
Cet isolateur met en oeuvre un nombre important de pièces, d'où il résulte un coût de fabrication élevé.
On connaît également les documents US-A-4 255 838 et DE 27 17 134 décrivant des isolateurs pour jeu de barres équipés d'un dispositif comportant, pour chacune des barres, une lamelle élastique venue de matière avec ledit isolateur et étant en appui élastique par son extrémité libre, sur ladite barre.

La présente propose un isolateur électrique permettant d'amortir les vibrations dues au passage du courant, ledit dispositif étant de conception simple et de coût de fabrication réduit.

A cet effet, la présente invention a pour objet un isolateur électrique selon la revendication 1.
Selon une réalisation particulière de l'invention, ladite au moins une lamelle élastique s'étend vers l'extérieur de l'isolateur.

Selon une autre réalisation, lesdites au moins deux lamelles élastiques s'étendent suivant une direction inclinée dans le sens de l'insertion de la barre.

Selon une caractéristique particulière, l'angle d'inclinaison entre le plan de ladite au moins une lamelle élastique et le plan de la barre associée à la au moins une lamelle(s) est compris entre 0 et 45°.

Selon une autre caractéristique, cet isolateur comporte, pour au moins l'une des barres, au moins deux lamelles élastiques situées d'un même côté de la barre mais espacées suivant la direction longitudinale de la barre.
Selon une autre caractéristique, cet isolateur comporte, pour au moins l'une des barres, au moins deux lamelles disposées l'une en regard de l'autre, de part et d'autre de la barre, lesdites lamelles s'étendant suivant deux plans concourants et étant en appui élastique par leur extrémité libre respectivement sur les deux faces opposées de la barre.
Selon une autre caractéristique, cet isolateur comporte un support comportant quatre logements prévus pour recevoir respectivement trois barres de phase et une barre de neutre, et en ce que le support comporte pour chacune des barres, quatre lamelles élastiques comprenant deux paires de lamelles élastiques, chaque paire comportant deux lamelles élastiques disposées en regard l'une par rapport à l'autre de part et d'autre de la barre, Selon une autre caractéristique, ce support comporte deux piliers d'extrémités reliés mécaniquement par des cloisons s'étendant perpendiculairement aux dits piliers, lesdites cloisons étant reliées mécaniquement sensiblement en leur milieu par des éléments de support des barres, et en ce que les piliers d'extrémité comportent chacun, pour chacune des barres, deux lamelles élastiques en regard l'une par rapport à l'autre et s'étendant suivant deux plans concourants.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue partielle en perspective d'un jeu de barres sur lequel sont montés un isolateur de trappe et des isolateurs intermédiaires selon l'invention, et

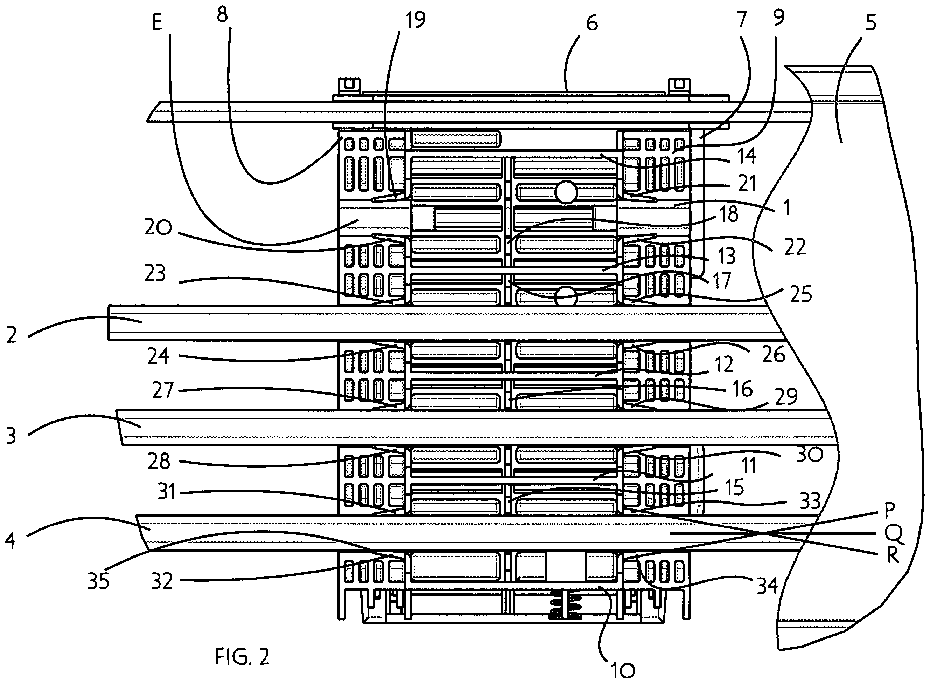

- La figure 2 est une vue en coupe longitudinale, suivant un plan parallèle au plan des barres, de l'isolateur de trappe seul, monté sur un jeu de barre.

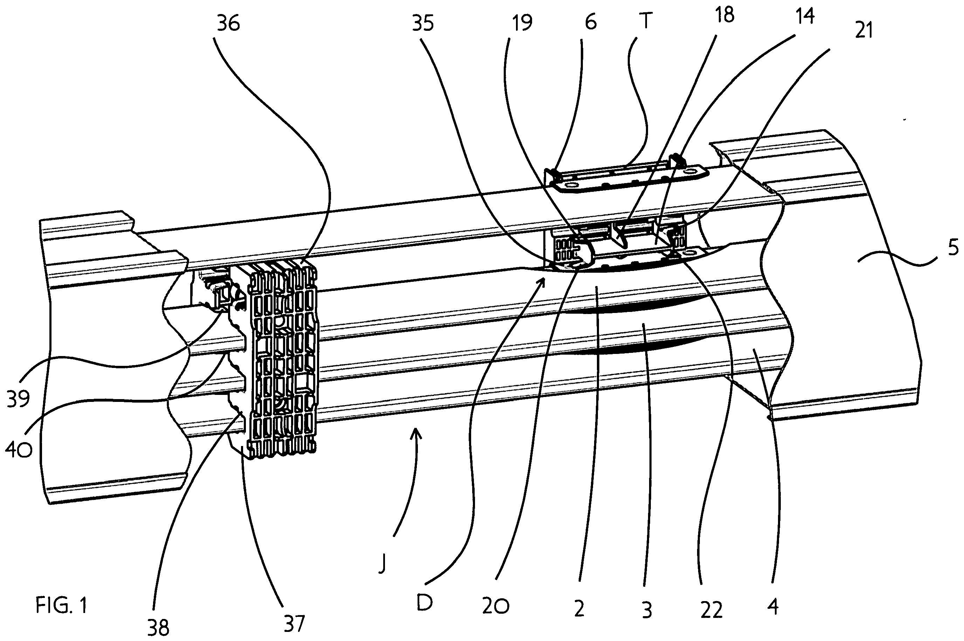

Sur la figure 1 a été représenté un jeu de barres J constitué par trois barres de phase 1,2,3 et une barre de neutre 4, dont seulement trois barres 2,3et 4 ont été représentées sur les dessins, lesdites barres 1,2,3,4 s'étendant parallèlement les unes par rapport aux autres dans un même plan. Ces barres sont montées à l'intérieur d'une enveloppe 5 dans laquelle sont également montés un isolateur de trappe 6 et des isolateurs intermédiaires 36, ces isolateurs étant destinés à isoler électriquement ces barres les unes par rapport aux autres.
L'isolateur de trappe 6 est formé par un support 7 comportant deux piliers verticaux 8,9 s'étendant perpendiculairement aux dites barres 1 à 4 et reliés mécaniquement l'un à l'autre par des cloisons horizontales 10,11,12,14, lesdites cloisons étant reliées mécaniquement deux à deux au moyen d'éléments de support intermédiaires 15,16,17 et 18. Cet isolateur comporte également une trappe d'accès T aux barres. Chacun de ces deux piliers 8,9 comporte, entre deux cloisons horizontales 10 à 14, un logement destiné à recevoir une barre, de même que chaque élément de support 15 à 18 comporte entre deux cloisons horizontales 10 à 14 un logement destiné à recevoir la même barre. Ainsi, l'isolateur 6 illustré comporte quatre logements E destinés à recevoir respectivement quatre barres. Conformément à l'invention, cet isolateur 6 comporte des lamelles élastiques 19 à 34 venues de matière, par exemple venues de moulage, avec ledit isolateur 6. Ces lamelles élastiques s'étendent suivant un plan P incliné par rapport au plan Q des barres d'un angle α compris entre 0 et 45°, avantageusement de 10°± 5. Ces lamelles 19 à 26 s'étendent en direction des barres et vers l'extérieur de l'isolateur de telle manière que l'extrémité libre 35 des lamelles soient en appui élastique sur les barres. Ces lamelles élastiques constituent le dispositif d'amortissement précité D.

Conformément à la réalisation illustrée, ces lamelles élastiques 19 à 34 sont supportées par les piliers 8,9. Chaque pilier 8,9 comporte ainsi, pour chacune des barres, deux lamelles élastiques en regard 19,20 ; 21,22 ; 23,24 ; 25,26 , 27,28 s'étendant suivant deux plans P,R concourants et disposées de part et d'autre de la barre, lesdites lamelles étant dirigées vers l'extérieur de l'isolateur.
Sur la figure 1, conformément à l'invention, des isolateurs intermédiaires 36 constitués chacun par des cloisons 37 comportant des orifices 38 pour le passage des barres sont également équipés de lamelles élastiques 39,40 venues de matière, de préférence de moulage, avec lesdits isolateurs 36 et dirigées vers les barres 1 à 4 mais vers l'intérieur des isolateurs 36 cette fois.
Ainsi, les barres étant serrées entre les lamelles élastiques, celles-ci amortissent les vibrations. Le découplage ainsi crée évite la transmission des vibrations à l'enveloppe et par la même la création de bruit.

On a donc réalisé grâce à l'invention, un isolateur comportant un dispositif d'amortissement des vibrations permettant de réduire les bruits générés par le passage de courant dans les barres, cet isolateur étant réalisé en une seule pièce au lieu de neuf, d'où un coût de fabrication réduit.

L'invention s'applique à tous les isolateurs dont la fonction est de maintenir l'écartement des barres entre elles.

Bien entendu, l'invention n'est pas limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont réalisées suivant son esprit.

## Revendications

1. Isolateur électrique pour jeu de barres équipé d'un dispositif d'amortissement des vibrations résultant du passage du courant dans les barres, ledit isolateur étant destiné à maintenir l'écartement des barres les unes par rapport aux autres,
**caractérisé en ce que** ledit dispositif d'amortissement D comporte, associé à l'une au moins des barres (1 à 4), au moins une paire de deux lamelles élastiques (19 à 34) venues de matière avec ledit isolateur (6,36), et disposées en regard l'une de l'autre de part et d'autre de la barre, lesdites deux lamelles (19 à 34) de chaque paire s'étendant l'une suivant un plan P, l'autre suivant un plan R, les plans P et R étant inclinés par rapport au plan Q de ladite barre et concourants l'un par rapport à l'autre, lesdites lamelles étant en appui élastique par leur extrémité libre (35) sur ladite barre (1 à 4).

2. Isolateur selon la revendication 1, **caractérisé en ce que** lesdites au moins deux lamelles élastiques (19 à 34) s'étendent vers l'extérieur de l'isolateur (6,36).

3. Isolateur selon la revendication 1, **caractérisé en ce que** lesdites au moins deux lamelles élastiques s'étendent suivant une direction inclinée dans le sens de l'insertion de la barre.

4. Isolateur selon l'une quelconque des revendications précédentes, **caractérisé en ce que** l'angle d'inclinaison α entre le plan P desdites au moins deux lamelles élastiques (19 à 34) et le plan Q de la barre (1 à 4) associée auxdites au moins deux lamelle(s) (19 à 34) est compris entre 0 et 45°.

5. Isolateur selon l'une quelconque des revendications précédentes, **caractérisé en ce qu'**il comporte, pour au moins l'une des barres (là 4), au moins deux paires de lamelles élastiques (19 à 34), chaque paire étant constituée de deux lamelles situées de part et d'autre de la barre, lesdites paires étant espacées suivant la direction longitudinale de la barre (1 à 4).

6. Isolateur selon l'une quelconque des revendications précédentes, **caractérisé en ce qu'**il comporte un support (7) comportant quatre logements E prévus pour recevoir respectivement trois barres de phase (1 à 3) et une barre de neutre (4), et **en ce que** le support (7) comporte pour chacune des barres (1 à 4), quatre lamelles élastiques (19,20,21,22) comprenant deux paires de lamelles élastiques (19,20), (21,22), (23,24), (25,26) etc...chaque paire comportant deux lamelles élastiques disposées en regard l'une par rapport à l'autre de part et d'autre de la barre (1 à 4).

7. Isolateur selon la revendication 6, **caractérisé en ce que** le support (7) comporte deux piliers d'extrémités (8,9) reliés mécaniquement par des cloisons (10 à 14) s'étendant perpendiculairement aux dits piliers (8,9), lesdites cloisons (10 à 14) étant reliées mécaniquement sensiblement en leur milieu par des éléments de support (15 à 18) des barres (14 à 17), et **en ce que** les piliers d'extrémité (8,9) comportent chacun, pour chacune des barres (1 à 4), deux lamelles élastiques (19,20) ; (21,22) ; etc...en regard l'une par rapport à l'autre et s'étendant suivant deux plans concourants P,R.

## Patentansprüche

1. Elektrischer Isolator für Sammelschiene, der mit einer Vorrichtung zum Dämpfen von Schwingungen, die sich aus dem Stromfluss in den Schienen ergeben, ausgerüstet ist, wobei der Isolator dazu bestimmt ist, den gegenseitigen Abstand zwischen den Schienen aufrecht zu erhalten,
**dadurch gekennzeichnet, dass** die Dämpfungsvorrichtung D in Zuordnung zu wenigstens einer der Schienen (1 bis 4) wenigstens ein Paar elastischer Plättchen (19 bis 34) umfasst, die einteilig mit dem Isolator (6, 36) ausgebildet sind und beiderseits der Schiene einander gegenüber angeordnet sind, wobei sich von den beiden Plättchen (19 bis 34) jedes Paars eines in einer Ebene P und das andere in einer Ebene R erstrecken, wobei die Ebenen P und R in Bezug auf die Ebene Q der Schiene geneigt sind und durch denselben Punkt gehen, wobei sich die Plättchen mit ihrem freien Ende (35) auf der Schiene (1 bis 4) elastisch abstützen.

2. Isolator nach Anspruch 1, **dadurch gekennzeichnet, dass** sich die wenigstens zwei elastischen Plättchen (19 bis 34) in die äußere Umgebung des Isolators (6, 36) erstrecken.

3. Isolator nach Anspruch 1, **dadurch gekennzeichnet, dass** sich die wenigstens zwei elastischen Plättchen in einer Richtung erstrecken, die in der Einsetzrichtung der Schiene geneigt ist.

4. Isolator nach einem der vorhergehenden Ansprüche, **dadurch gekennzeichnet, dass** der Neigungswinkel α zwischen der Ebene P der wenigstens zwei elastischen Plättchen (19 bis 34) und der Ebene Q der Schiene (1 bis 4), die den wenigstens zwei Lamellen (19 bis 34) zugeordnet ist, im Bereich von 0 bis 45° liegt.

5. Isolator nach einem der vorhergehenden Ansprüche, **dadurch gekennzeichnet, dass** er für wenigstens eine der Schienen (1 bis 4) wenigstens zwei Paare elastischer Plättchen (19 bis 34) umfasst, wobei jedes Paar aus zwei Lamellen gebildet ist, die sich beiderseits der Schiene befinden, wobei die Paare in der Längsrichtung der Schiene (1 bis 4) beabstandet sind.

6. Isolator nach einem der vorhergehenden Ansprüche, **dadurch gekennzeichnet, dass** er einen Träger (7) umfasst, der vier Aufnahmeräume E enthält, die dazu vorgesehen sind, drei Phasenschienen (1 bis 3) und eine Neutralschiene (4) aufzunehmen, und dass der Träger (7) für jede Schiene (1 bis 4) vier elastische Plättchen (19, 20, 21, 22) umfasst, die zwei Paare elastischer Plättchen (19, 20), (21, 22), (23, 24), (25, 26) usw. enthalten, wobei jedes Paar zwei elastische Plättchen enthält, die beiderseits der Schiene (1 bis 4) einander gegenüber angeordnet sind.

7. Isolator nach Anspruch 6, **dadurch gekennzeichnet, dass** der Träger (7) zwei Endstützen (8, 9) umfasst, die durch Trennwände (10 bis 14), die sich senkrecht zu den Stützen (8, 9) erstrecken, mechanisch verbunden sind, wobei die Trennwände (10 bis 14) im Wesentlichen in ihrer Mitte durch Tragelemente (15 bis 18) der Schienen mechanisch verbunden sind, und dass die Endstützen (8, 9) jeweils für jede der Schienen (1 bis 4) zwei elastische Lamellen (19, 20); (21, 22); usw. aufweisen, die sich einander gegenüber befinden und sich in zwei Ebenen P, R, die durch denselben Punkt gehen, erstrecken.

## Claims

1. Electrical insulator for a set of rods equipped with a device for damping vibrations resulting from the passage of the current in the rods, said insulator being intended to keep the rods separate from each other,
**characterised in that** said damping device D comprises, associated with at least one of the rods (1 to 4), at least one pair of two resilient strips (19 to 34) integrally formed with said insulator (6, 36) and disposed facing each other either side of the rod, one of said two strips (19 to 34) of each pair extending along a plane P, the other one extending along a plane R, the planes P and R being inclined relative to the plane Q of said rod and intersecting with each other, said strips being in resilient abutment on said rod (1 to 4) via their free end (35).

2. Insulator according to Claim 1, **characterised in that** said at least two resilient strips (19 to 34) extend towards the outside of the insulator (6, 36).

3. Insulator according to Claim 1, **characterised in that** said at least two resilient strips extend in a direction inclined in the direction of insertion of the rod.

4. Insulator according to any of the preceding claims, **characterised in that** the angle of incline *α* between the plane P of said at least two resilient strips (19 to 34) and the plane Q of the rod (1 to 4) associated with said at least two strip(s) (19 to 34) is between 0° and 45°.

5. Insulator according to any of the preceding claims, **characterised in that** it comprises, for at least one of the rods (1 to 4), at least two pairs of resilient strips (19 to 34), each pair being formed by two strips located either side of the rod, said pairs being spaced apart in the longitudinal direction of the rod (1 to 4).

6. Insulator according to any of the preceding claims, **characterised in that** it comprises a support (7) comprising four housings E designed to respectively receive three phase rods (1 to 3) and one neutral rod (4), and **in that** the support (7) comprises, for each of the rods (1 to 4), four resilient strips (19, 20, 21, 22) comprising two pairs of resilient strips (19, 20), (21, 22), (23, 24), (25, 26), etc., each pair comprising two resilient strips disposed facing each other either side of the rod (1 to 4).

7. Insulator according to Claim 6, **characterised in that** the support (7) comprises two end columns (8, 9) mechanically connected by partitions (10 to 14) extending perpendicular to said columns (8, 9), said partitions (10 to 14) being mechanically connected substantially at their centre by support elements (15 to 18) for the rods (14 to 17), and **in that** the end columns (8, 9) each comprise, for each of the rods (1 to 4), two resilient strips (19, 20), (21, 22), etc., facing each other and extending along two intersecting planes P, R.
